# EUROPEAN PATENT APPLICATION

(11) **EP 3 181 338 A1**
(43) Date of publication of application: **21.06.2017**
(21) Application number: 16203633.9
(22) Date of filing: 13.12.2016
(51) Int. Cl.: B29C 67/00, B33Y 10/00

(54) **PRINTING METHOD FOR FORMING A THREE-DIMENSIONAL BODY WITH OVERHANG**

(30) Priority: 16.12.2015 EP 15200385
(71) Applicant: OCE-Technologies B.V., 5914 CA Venlo (NL)
(72) Inventor: MIEDEMA, Mark, 5914 CA VENLO (NL)
(74) Representative: OCE IP Department

(57) **Abstract**

A method of forming a three-dimensional body (10) having an overhang (24, 28), the method comprising:
- superposing droplets (12) of a first curable liquid for forming the body (10);
- superposing droplets (32) of a second curable liquid for forming a support structure (30) for the overhang (24, 28), wherein, at a level below the overhang, the support structure (30) is configured to be spaced apart from a peripheral surface of the body (10) by a gap (36, 40) and
- when the overhang (24; 28) has been formed, removing the support structure (30),
characterized in that, when the level of the overhang (24, 28) is being reached in the print process, the droplets (32) of the second liquid are deposited in positions offset towards the peripheral surface of the body (10) so as to form a support overhang (38, 42) which narrows the gap (36, 40).

## Description

The invention relates to a method of forming a three-dimensional body having an overhang, the method comprising:
- superposing droplets of a first curable liquid for forming the body;
- superposing droplets of a second curable liquid for forming a support structure for the overhang, wherein, at a level below the overhang, the support structure is configured to be spaced apart from a peripheral surface of the body by a gap; and
- when the overhang has been formed, removing the support structure.

In the art of three-dimensional ink jet printing or relief printing (3D or 2.5D ink jet printing), it is sometimes required to print a body which has an overhang, i.e. a body portion which projects laterally and is not supported from below by any other part of the body.

If the ink that is used for printing has a sufficient viscosity and cures quickly enough, and if the slope of the peripheral wall which forms the bottom side of the overhang is relatively steep, it is possible to form the overhang simply by depositing the ink droplets at the periphery of the body with a slight outward offset which increases from layer to layer.

However, when the ink has a low viscosity and/or takes a long time to cure, and especially when the bottom surface of the overhang is almost horizontal, it is necessary to provide a support structure for supporting the newly deposited ink droplets until they have cured.

US 5 503 785 A discloses a printing method of the type indicated above which permits to form a body which has a peripheral wall which is almost vertical in the lower part and then gradually flares out to form the bottom side of the overhang. In the lowermost part of the overhang, where the peripheral wall starts to flare out, the gradient of the surface is still relatively steep, so that no external support is needed for the newly deposited droplets. Therefore, a support structure is formed to support the overhang only in those portions where the bottom face of the overhang is relatively flat, whereas in the lower part, where the peripheral surface is steeper, a gap is left between the peripheral wall of the body and the support structure.

However, when the body is desired to have a shape in which the slope of the peripheral wall changes abruptly from an almost vertical orientation to an almost horizontal orientation at the root of the overhang, it is necessary to support the overhang already at the very point where the overhang begins, so that no gap must be present between the support structure and the lower stem portion of the body.

It is an object of the invention to provide a method which permits to form a body with an overhang with a shape that may vary in a large range and with improved surface finish of the printed body.

In order to achieve this object, the method according to the invention provides that, when the level of the overhang is being reached in the print process, the droplets of the second liquid are deposited in positions offset towards the peripheral surface of the body so as to form a support overhang which narrows the gap.

Thus, the method according to the invention permits to provide a gap between the peripheral surface of the stem portion of the printed body even in cases where there is a sharp transition between the stem portion of the body and the bottom face of the overhang. Thanks to the support overhang that is formed at the support structure, the support structure approaches the peripheral surface of the printed body so as to narrow the gap. In this way, regardless of the shape of the body to be printed, the width of the gap can be narrowed to such an extent that the remaining gap, if any, can be bridged by the ink droplets that are to form the overhang of the printed body.

Leaving a gap between the stem portion of the printed body and the support structure has the great advantage that the surface finish of the peripheral wall of the stem portion of the body can be improved remarkably. If no gap is present, it is practically impossible to obtain a glossy surface at the periphery of the printed body that has been in contact with the support structure. In the method according to the invention, however, the gap prevents the surface of the printed body from being disturbed by the contact with the support structure, so that a glossy surface can be obtained on the major part of the peripheral surface of the printed body.

It is another advantage of the invention that, since the gap is bridged by the material of the support structure and consequently does not have to be bridged by a gentle overhang of the printed body itself, it is possible to use a low-viscosity ink and/or a slow-curing ink for printing the body. The use of such inks permits to obtain a particularly smooth and glossy surface on the entire printed body.

Useful optional features of the invention are indicated in the dependent claims.

In one embodiment, the first liquid used for forming the printed body may be a UV-curing ink, whereas the second liquid which forms the support structure may be a hot-melt ink or a water-soluble ink having a sufficient viscosity and curing or solidifying fast enough to form the support overhang at the support structure. Moreover, these inks may easily be removed in the final step of removing the support structure by heating and melting away the hot-melt ink and by dissolving the support structure in water, respectively.

An embodiment example will now be described in conjunction with the drawings, wherein:
- Fig. 1: is a sectional view of a printed three-dimensional body and a support structure formed by the method according to the invention; and
- Fig. 2: is a schematic view of the body and the support structure shown in Fig. 1 in a semi-finished state in the process of being printed with an ink jet print head.

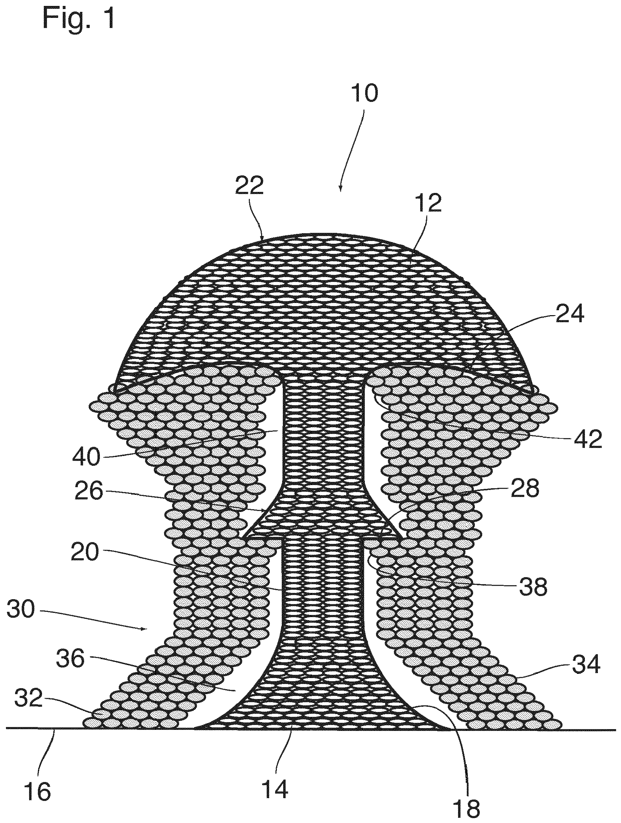

As an illustrative example, Fig. 1 shows a mushroom-shaped three-dimensional body 10 formed by superposing and curing droplets 12 of a UV-curable ink. A bottom layer 14 of the ink droplets 12 has been printed directly onto the surface of a substrate 16, using an ink jet printer. Then, successive layers or further ink droplets 12 have been deposited on top of the bottom layer 14.

In the example shown, the body 10 has an upwardly tapered base portion 18 with a peripheral wall that becomes increasingly steeper from the bottom to the top. The base portion 18 merges into a cylindrical stem portion 20 which has a vertical cylindrical peripheral wall. The top part of the body 10 is formed by a mushroom head 22 which has a diameter significantly larger than that of the stem portion 20 and thereby forms an overhang 24. Further, the stem portion 20 is surrounded by a ledge 26 which forms another overhang 28.

The liquid ink forming the droplets 12 has a high viscosity as long as it has not been cured by UV radiation. Therefore, in order to form the overhangs 24 and 28, a support structure 30 is needed for temporarily supporting the ink forming the overhangs. The support structure 30 is formed by superposing droplets 32 of ink with the ink jet printer and is built up concurrently with the body 10.

In this example, however, the ink forming the droplets 32 of the support structure 30 is different from the ink forming the droplets 12 of the printed body 10. More particularly, a hot-melt ink is used for forming the support structure 30 in this example. The viscosity of the hot melt ink can easily be controlled by appropriately adjusting the temperature at which the ink is jetted out from the print head. Moreover, when the droplets 32 hit the substrate 16 or a lower layer of the droplets 32 that have been printed earlier, the ink will be cooled abruptly and will therefore solidify within a short time. As a consequence, the tendency of the droplets 32 to spread is smaller than for the droplets 12 of UV-curable ink. This is why the droplets 32 have been shown to have a larger thickness than the droplets 12 in the schematic graphic representation in Fig. 1.

Thanks to the properties of the hot melt ink, it is relatively easy to form overhanging structures in the support structure 30. Thus, when the base portion 18 of the body 10 and the corresponding layers of the support structure 30 are formed, it is not necessary to deposit the droplets 32 forming the support structure directly on top of the droplets 12 forming the tapering wall of the base portion 18. Instead, the support structure 30 is formed in the shape of a hollow cone 34 which surrounds the body 10 with a gap 36 formed between the peripheral surface of the body 10 and the inner peripheral surface of the support structure. The gap 36 is also present at the periphery of the stem portion 20 below the overhang 28 and has an average width in the order of magnitude of 100 µm. Thanks to the presence of the gap 36, the peripheral surface of the body 10 is prevented from coming into contact with the support structure, which permits to retain a high gloss for the peripheral surface of the body 10.

Only the ink droplets 32 in the last few layers directly underneath the overhang 28 have been deposited with an offset so as to form a support overhang 38 which approaches the peripheral surface of the stem portion 20 and thereby reduces the width of the gap 36. In this example, the width of the gap is reduced to zero, so that the droplets 32 in the last layer directly underneath the overhang 28 contact the peripheral surface of the stem portion 20. However, since the area of contact is very small and is largely hidden by the ledge 26, this does practically not compromise the surface finish of the body 10.

The support overhang 38 has a flat top surface serving as a substrate for the ink dots 12 that are to form the first layer of the ledge 26. In this example, the bottom face of the overhang 28 extends in horizontal direction, i.e. at right angles to the peripheral wall of the stem portion 20, so that a sharp transition is formed between the peripheral wall of the stem portion and the bottom face of the overhang 28. Nevertheless, it is possible to provide sufficient support for the ink droplets 12 forming the bottom layer of the ledge 26 while keeping away the support structure 30 from the periphery of the stem portion almost over the entire height of the latter.

At the periphery of the ledge 26 and the periphery of the adjacent upper part of the stem portion 20, the support structure 30 is again configured to form a gap 40 with the peripheral surface of the body 10. At the level of the ledge 26, the support structure forms another overhanging structure which permits to keep the width of the gap 40 between the periphery of the ledge 26 and the support structure 30 approximately constant.

At the top end of the stem portion 20, at the transition to the overhang 24, the support structure forms another support overhang 42 so as to provide support for the overhang 24 at the bottom side of the mushroom head 22.

In the example shown, the top part of the support structure 30 is also configured to flare out at of the outer periphery so that the diameter is increased to at least the diameter of the mushroom head 22. Again, contact between the body 10 and the support structure 30 is limited to the almost invisible surface portions at the bottom side of the overhang 24.

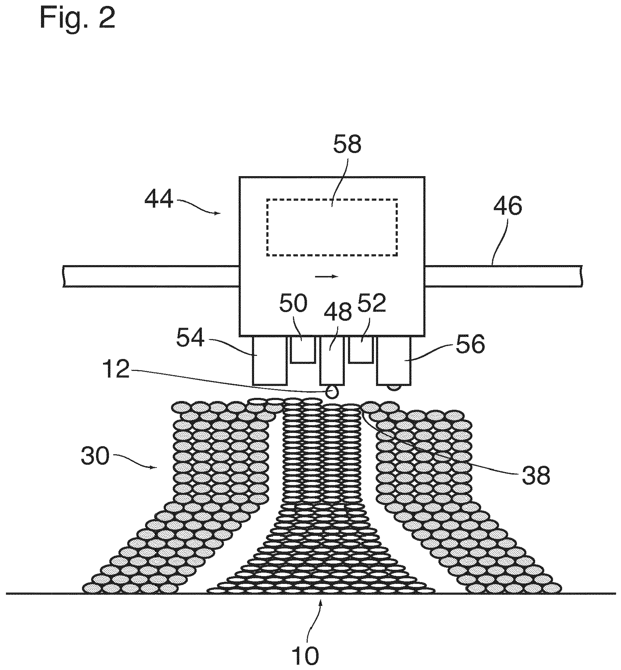

The process of forming the body 10 and the support structure 30 as shown in Fig. 1 has been illustrated in Fig. 2. A carriage 44 is guided along height-adjustable guide rails 46 and driven to reciprocate across the body 10 and the support structure 30 to be formed. The carriage carries a first print head 48 for printing with the UV-curable ink, UV lamps 50 and 52 disposed on either side of the first print head 48, and two second print heads 54 and 56 for hot melt ink disposed on opposite sides of the UV lamps 50, 52. An electronic control system 58 controls the operations of the print heads 48, 54, 56, and the UV lamps 50, 52 as well as the movement of the carriage 44 in accordance with a control program.

In the condition shown in Fig. 2, the carriage 44 moves in the direction from left to right, and the first print head 48 is just printing the first layer of the ledge 26. The UV lamp 50 is energized to cure the ink droplets 12 as soon as they have been deposited. The print head 56 is just busy with printing the top layer of the support overhang 38 so as to provide support for the ink droplets 12 to be printed next. During the return stroke of the carriage 44, the UV lamp 50 will be switched off and the other UV lamp 52 will be switched on instead, and the hot melt print head 54 will be used for printing a next layer of the support structure 30.

## Claims

1. A method of forming a three-dimensional body (10) having an overhang (24, 28), the method comprising:
- superposing droplets (12) of a first curable liquid for forming the body (10);
- superposing droplets (32) of a second curable liquid for forming a support structure (30) for the overhang (24, 28), wherein, at a height level below the overhang, the support structure (30) is configured to be spaced apart from a peripheral surface of the body (10) by a gap (36, 40) and
- when the overhang (24; 28) has been formed, removing the support structure (30),
**characterized in that**, when the height level of the overhang (24, 28) is being reached in the print process, the droplets (32) of the second liquid are deposited in positions offset towards the peripheral surface of the body (10) so as to form a support overhang (38, 42) which narrows the gap (36, 40).

2. The method according to claim 1, wherein the support overhang (38, 42) is configured to reduce the width of the gap (36, 40) to zero at the level of the overhang (24, 28) of the body (10).

3. The method according to claim 1 or 2, wherein the second liquid used for forming the support structure (30) has a higher viscosity than the first liquid used for forming the body (10).

4. The method according to any of the preceding claims, wherein the second liquid used for forming the support structure (30) is an ink curing faster than the first liquid forming the body (10).

5. The method according to any of the preceding claims, wherein the first liquid used to from the body (10) is a UV-curing ink.

6. The method according to any of the preceding claims, wherein the second liquid used for forming the support (30) is a hot-melt ink.

7. The method according to any of the preceding claims, wherein the gap (36, 40) has a width in a range from 50 to 300 µm at all levels other than the level of the support overhang (38, 42).

8. An ink jet printer comprising at least one first print head (48) for printing a three-dimensional body (10) and at least one second print head (54, 56) for printing a support structure (30), **characterized by** an electronic control system (58) programmed to cause the ink jet printer to perform the method according to any of the claims 1 to 7.

9. The printer according to claim 8, comprising at least one UV lamp (50, 52) arranged to cure ink that has been printed with the first print head (48).

10. The printer according to claim 8 or 9, wherein the second print head (54) is a hot-melt print head.

11. A software product comprising program code on a machine-readable storage medium, the program code being arranged to cause a control system (58) of an ink jet printer according to any of the claims 8 to 10 to perform the method according to any of the claims 1 to 7.
